(19) **Europäisches Patentamt**

**European Patent Office**

**Office européen des brevets**

(11) **EP 0 763 980 B1**

(12) **EUROPEAN PATENT SPECIFICATION**

(45) Date of publication and mention
of the grant of the patent:
**31.03.2004 Bulletin 2004/14**

(51) Int Cl.⁷: **A23G 3/30**

(86) International application number:
**PCT/US1995/006579**

(21) Application number: **95920643.4**

(22) Date of filing: **24.05.1995**

(87) International publication number:
**WO 1995/032635 (07.12.1995 Gazette 1995/52)**

(54) **Use of medium chain triglycerides to improve properties of chewing gum**

Verwendung von Mittellange-Ketten-Triglyceride zur Verbesserung der Eigenschaften von Kaugummi

Utilisation de triglycérides à chaîne moyenne pour améliorer les propriétés du chewing gum

(84) Designated Contracting States:
**DE DK ES FR GB IT**

(30) Priority: **27.05.1994 WOPCT/US94/05771**
**29.11.1994 US 346566**

(43) Date of publication of application:
**26.03.1997 Bulletin 1997/13**

(73) Proprietor: **WM. WRIGLEY JR. COMPANY**
**Chicago Illinois 60611 (US)**

(72) Inventors:
• **BUNCZEK, Michael T.**
**Dolton, IL 60419 (US)**
• **DUBINA, Edward S.**
**Bloomington, MN 55438 (US)**
• **PATEL, Mansukh M.**
**Downers Grove, IL 60515 (US)**
• **MAZUREK, Pamela**
**Orland Park, IL 60462 (US)**
• **YATKA, Robert J.**
**Orland Park, IL 60462 (US)**
• **MAZZONE, Philip**
**Griffith, IN 46319 (US)**
• **URNEZIS, Philip W.**
**Lombard, IL 60148 (US)**

(74) Representative: **Hayes, Adrian Chetwynd et al**
**Boult Wade Tennant,**
**Verulam Gardens**
**70 Gray's Inn Road**
**London WC1X 8BT (GB)**

(56) References cited:
ES-A- 2 040 633          JP-A- 58 146 241
US-A- 4 378 374          US-A- 4 446 157
US-A- 4 452 820          US-A- 5 156 866

**Description**

BACKGROUND OF THE INVENTION

The present invention relates generally to chewing gum. More specifically, the present invention relates to improved formulations for chewing gum.

Chewing gum generally consists of a water insoluble gum base and a water soluble portion along with flavors. The water soluble portion and flavors dissipate during chewing and the gum base is retained in the mouth throughout the chew.

The insoluble gum base generally comprises elastomers, resins, fats and oils, softeners, and inorganic fillers. Elastomers can include synthetic elastomers including polyisobutylene, isobutylene-isoprene copolymers, styrene-butadiene copolymers, polyvinyl acetate, polyisoprene, polyethylene, vinyl acetate - vinyl laurate copolymers, and combinations thereof. Natural elastomers that can be used include natural rubber.

The gum base can include elastomer plasticizers. Such elastomer plasticizers can include natural rosin esters, as well as other elastomer plasticizers. Additionally, the gum base can include fillers/texturizers and softeners/emulsifiers. Softeners are added to chewing gum in order to optimize the chewability and mouth feel of the gum. Softeners/emulsifiers that are typically used include tallow, hydrogenated tallow, hydrogenated and partially hydrogenated vegetable oils, cocoa butter, glycerol monostearate, glycerol triacetate, lecithin, and combinations thereof.

In addition to a water insoluble gum base portion, a typical chewing gum composition includes a water soluble portion and one or more flavoring agents. The water soluble portion can include bulk sweeteners, high intensity sweeteners, flavoring agents, softeners, emulsifiers, colors, acidulants, fillers, antioxidants, and other components that provide desirable attributes.

Although there are a number of manufacturing methods by which chewing gum can be made, a typical process is to create sheets of chewing gum that are then cut into sticks. During the manufacturing process, the sheets of chewing gum are usually stacked one on top of another. A problem that can arise is that the sheets can stick together making them difficult to pull apart. The stickiness of chewing gum can also be an issue in the packaging or wrapping of chewing gum.

In a similar vein, the stickiness of pellet chewing gum can create manufacturing issues. Pellet chewing gum is usually created in sheets during manufacture and must be broken into individual pellets, without damaging the pellets, before the coating of the pellets.

ES 2 044 633 A describes a chewing gum composition comprising a mixture of medium chain triglycerides included for the purpose of preparing anti-halitosis oral compositions.

US 4 452 820 A contemplates the incorporation of (tri)glyceryl esters of medium chain fatty acids such as caprylic, capric or lauric acid, among other possible alternatives, in order to obtain a chewing gum composition with reduced tackiness in the absence of some constituents such as ester gums.

SUMMARY OF THE INVENTION

The present invention provides the use of medium chain triglycerides in a chewing gum formulation to reduce the stickiness of a chewing gum product.

The present invention also provides the use of at least 0.01% by weight medium chain triglycerides in a chewing gum formulation to improve the shelf life of flavour that is contained in the chewing gum product. Pursuant to the present invention, chewing gum is provided that includes medium chain triglycerides. The medium chain triglycerides provide improved properties to the chewing gum. These properties include reducing the stickiness of the gum products that are created, improving texture, and improving shelf life.

A variety of chewing gum formulations including medium chain triglycerides can be created and/or utilized pursuant to the present invention. The chewing gum can include a base formulation that may be conventional bases that include wax or are wax-free, tacky or non-tacky and/or bubble gum-type bases. The gum formulations can be low or high moisture formulations containing low or high amounts of moisture-containing syrup. Medium chain triglycerides can also be used in low sugar and non-sugar containing gum formulations made with sorbitol, mannitol, other polyols, and non-sugar carbohydrates. Non-sugar formulations can include low or high moisture sugar-free chewing gums.

In an embodiment, the medium chain triglycerides are used in chewing gum formulations at levels of from 0.01% to 5% and preferably, from 0.02% to 2% by weight of the chewing gum formulation.

In an embodiment, the present invention provides a method for making chewing gum comprising the steps of: using in a chewing gum formulation medium chain triglycerides to create a chewing gum product that has reduced stickiness.

In an embodiment, the present invention provides a method for making chewing gum having a pellet shape comprising the steps of: creating a sheet of chewing gum having a pellet shape and including medium chain triglycerides to create a product that has reduced stickiness as compared to chewing gum not including medium chain triglycerides; and breaking the sheet into individual pellet-shaped products.

Medium chain triglycerides, when used according to the present invention, affords the chewing gum an improved texture, improved shelf life, and improved flavor quality. Even though medium chain triglycerides are similar to other fats and oils in some respects, medium chain triglycerides are easily digested and provide other health attributes that create a resultant chewing gum product that has a high consumer-acceptability.

It is an advantage of the present invention to provide an improved chewing gum formulation.

A further advantage of the present invention is to provide a process that can be used to create chewing gum.

Another advantage of the present invention is that it provides an improved chewing gum softener.

Still further, an advantage of the present invention is that it provides an improved chewing gum plasticizer.

Additionally, an advantage of the present invention is that it provides an improved emulsifying agent for chewing gum.

Moreover, an advantage of the present invention is that it provides an improved method for creating stick chewing gum.

Still, an advantage of the present invention is that it provides an improved method for making pellet-shaped chewing gum.

Furthermore, an advantage of the present invention is that it provides a chewing gum having improved texture.

An advantage of the present invention is that it provides a chewing gum having an improved flavor shelf life.

Still further, an advantage of the present invention is that it provides a chewing gum having improved flavor quality.

Another advantage of the present invention is that it creates a chewing gum product that has reduced stickiness.

Additional features and advantages of the present invention are described in, and will be apparent from, the detailed description of the presently preferred embodiments.

DETAILED DESCRIPTION OF THE PRESENTLY PREFERRED EMBODIMENTS

The present invention provides improved chewing gum formulations and methods for making chewing gum products. Pursuant to the present invention, medium chain triglycerides are used. The medium chain triglycerides can be used to improve the properties of the chewing gum. The use of medium chain triglycerides in the chewing gum formulation has a significant softening effect on the final texture without softening the initial texture. It has also been discovered that the use of medium chain triglycerides in the chewing gum formulation reduces the stickiness of the resultant gum products to each other. This improves the manufacturing process for making chewing gum. Pursuant to the present invention, not only can medium chain triglycerides be used to modify texture, they may also improve flavor shelf life by reducing flavor oxidation. Additionally, the medium chain triglycerides can be used as flavor carriers.

Medium chain triglycerides are fat/oil substances that can be obtained from the fractionation of coconut oil. Although medium chain triglycerides are considered a fat/oil, they have unique physical properties compared to other fats and oils. For example, medium chain triglycerides are more digestible than most other fats and oils. As a result of their physical properties, medium chain triglycerides can impart a variety of advantageous properties to chewing gum as compared to other lipids.

Medium chain triglycerides are made up of a mixture of medium chain fatty acids (MCFA) ranging from caproic to lauric ($C_6$-$C_{12}$) in its triglyceride form. Fractionated coconut oil is generally about 95% caprylic ($C_8$:0) and capric ($C_{10}$:0). The triglycerides of coconut oil are heat hydrolyzed to form free fatty acid and glycerol, and to methyl esters of fatty acids. The esters are fractionally distilled to separate the medium chain fatty acids and reesterified with glycerol to form medium chain triglycerides.

Medium chain triglycerides are a clear, tasteless, odorless product that has a low viscosity and good spreadability. Medium chain triglycerides are somewhat more soluble in water than long chain triglycerides. Due to the medium chain triglycerides' tasteless and odorless properties medium chain triglycerides provide a good flavor carrier and solvent and can be used in candy as a release agent.

The United States Food & Drug Administration is now considering medium chain triglycerides in a GRAS Affirmation petition under the generic name of captrin. Currently, its unique easy digestibility as a vegetable oil makes it useful as a component in medical foods.

Medium chain triglycerides are available from Stepan Company of Maywood, New Jersey under the tradename NEOBEE® M-5, as well as from Karlshamns of Columbus, Ohio under the tradename CAPTEX®.

Pursuant to the present invention, medium chain triglycerides can be used in chewing gum formulations. The medium chain triglycerides can be used in a variety of different formulations. If desired, however, medium chain triglycerides can be added to base formulations.

Being filed on even date herewith is a patent application entitled: "CHEWING GUM HAVING IMPROVED TEXTURE AND CONTAINING MEDIUM CHAIN TRIGLYCERIDES" that is owned by the owner of the instant patent application. That application discloses and claims medium chain triglycerides in gum bases.

As previously noted, chewing gum generally consists of a water insoluble gum base, a water soluble portion, and flavors.

The insoluble gum base generally comprises elastomers, resins, fats and oils, softeners, and inorganic fillers. The gum base may or may not include wax. The insoluble gum base can constitute approximately 5 to about 95 percent, by weight, of the chewing gum, more commonly, the gum base comprises 10 to about 50 percent of the gum, and in some preferred embodiments, 20 to about 35 percent, by weight, of the chewing gum.

In an embodiment, the chewing gum base of the present invention contains about 20 to about 60 weight percent synthetic elastomer, 0 to about 30 weight percent natural elastomer, about 5 to about 55 weight percent elastomer plasticizer, about 4 to about 35 weight percent filler, about 5 to about 35 weight percent softener, and optional minor amounts (about one percent or less) of miscellaneous ingredients such as colorants, antioxidants, etc.

Synthetic elastomers may include, but are not limited to, polyisobutylene with a GPC weight average molecular weight of about 10,000 to about 95,000, isobutylene-isoprene copolymer (butyl elastomer), styrene-butadiene copolymers having styrene-butadiene ratios of about 1:3 to about 3:1, polyvinyl acetate having a GPC weight average molecular weight of about 2,000 to about 90,000, polyisoprene, polyethylene, vinyl acetate-vinyl laurate copolymer having vinyl laurate content of about 5 to about 50 percent by weight of the copolymer, and combinations thereof.

Preferred ranges are, for polyisobutylene, 50,000 to 80,000 GPC weight average molecular weight, for styrene-butadiene, 1:1 to 1:3 bound styrene-butadiene, for polyvinyl acetate, 10,000 to 65,000 GPC weight average molecular weight with the higher molecular weight polyvinyl acetates typically used in bubble gum base, and for vinyl acetate-vinyl laurate, vinyl laurate content of 10-45 percent.

Natural elastomers may include natural rubber such as smoked or liquid latex and guayule as well as natural gums such as jelutong, lechi caspi, perillo, sorva, massaranduba balata, massaranduba chocolate, nispero, rosindinha, chicle, gutta hang kang, and combinations thereof. The preferred synthetic elastomer and natural elastomer concentrations vary depending on whether the chewing gum in which the base is used is adhesive or conventional, bubble gum or regular gum, as discussed below. Preferred natural elastomers include jelutong, chicle, sorva and massaranduba balata.

Elastomer plasticizers may include, but are not limited to, natural rosin esters, often called estergums, such as glycerol esters of partially hydrogenated rosin, glycerol esters polymerized rosin, glycerol esters of partially dimerized rosin, glycerol esters of rosin, pentaerythritol esters of partially hydrogenated rosin, methyl and partially hydrogenated methyl esters of rosin, pentaerythritol esters of rosin; synthetics such as terpene resins derived from alpha-pinene, beta-pinene, and/or d-limonene; and any suitable combinations of the foregoing. The preferred elastomer plasticizers will also vary depending on the specific application, and on the type of elastomer which is used.

Fillers/texturizers may include magnesium and calcium carbonate, ground limestone, silicate types such as magnesium and aluminum silicate, clay, alumina, talc, titanium oxide, mono-, di- and tri-calcium phosphate, cellulose polymers, such as wood, and combinations thereof.

Softeners/emulsifiers may include tallow, hydrogenated tallow, hydrogenated and partially hydrogenated vegetable oils, cocoa butter, glycerol monostearate, glycerol triacetate, lecithin, mono-, di- and triglycerides, acetylated monoglycerides, fatty acids (e.g. stearic, palmitic, oleic and linoleic acids), and combinations thereof.

Colorants and whiteners may include FD&C-type dyes and lakes, fruit and vegetable extracts, titanium dioxide, and combinations thereof.

The base may or may not include wax. An example of a wax-free gum base is disclosed in U.S. Patent No. 5,286,500.

In addition to a water insoluble gum base portion, a typical chewing gum composition includes a water soluble bulk portion and one or more flavoring agents. The water soluble portion can include bulk sweeteners, high intensity sweeteners, flavoring agents, softeners, emulsifiers, colors, acidulants, fillers, antioxidants, and other components that provide desired attributes. As previously noted and discussed below, the medium chain triglycerides are added to the other components of the chewing gum formulation.

The softeners, which are also known as plasticizers and plasticizing agents, generally constitute between approximately 0.5 to about 15% by weight of the chewing gum. The softeners may, in addition to including medium chain triglycerides, include glycerin, lecithin, and combinations thereof. Aqueous sweetener solutions such as those containing sorbitol, hydrogenated starch hydrolysates, corn syrup and combinations thereof, may also be used as softeners and binding agents in chewing gum.

Bulk sweeteners include both sugar and sugarless components. Bulk sweeteners typically constitute 5 to about 95% by weight of the chewing gum, more typically, 20 to 80% by weight, and more commonly, 30 to 60% by weight of the gum.

Sugar sweeteners generally include saccharide-containing components commonly known in the chewing gum art, including, but not limited to, sucrose, dextrose, maltose, dextrin, dried invert sugar, fructose, levulose, galactose, corn syrup solids, and the like, alone or in combination.

Sorbitol can be used as a sugarless sweetener. Additionally, sugarless sweeteners can include, but are not limited to, other sugar alcohols such as mannitol, xylitol, hydrogenated starch hydrolysates, maltitol, and the like, alone or in combination.

High intensity artificial sweeteners can also be used in combination with the above. Preferred sweeteners include, but are not limited to sucralose, aspartame, salts of acesulfame, alitame, saccharin and its salts, cyclamic acid and its salts, glycyrrhizin, dihydrochalcones, thaumatin, monellin, and the like, alone or in combination. In order to provide longer lasting sweetness and flavor perception, it may be desirable to encapsulate or otherwise control the release of at least a portion of the artificial sweetener. Such techniques as wet granulation, wax granulation, spray drying, spray chilling, fluid bed coating, coacervation, and fiber extrusion may be used to achieve the desired release characteristics.

Usage level of the artificial sweetener will vary greatly and will depend on such factors as potency of the sweetener, rate of release, desired sweetness of the product, level and type of flavor used and cost considerations. Thus, the active level of artificial sweetener may vary from 0.02 to about 8%. When carriers used for encapsulation are included, the usage level of the encapsulated sweetener will be proportionately higher.

Combinations of sugar and/or sugarless sweeteners may be used in chewing gum. Additionally, the softener may also provide additional sweetness such as with aqueous sugar or alditol solutions.

If a low calorie gum is desired, a low caloric bulking agent can be used. Examples of low caloric bulking agents include: polydextrose; Raftilose, Raftilin; Fructooligosaccharides (NutraFlora); Palatinose oligosaccharide; Guar Gum Hydrolysate (Sun Fiber); or indigestible dextrin (Fibersol). However, other low calorie bulking agents can be used.

A variety of flavoring agents can be used. The flavor can be used in amounts of approximately 0.1 to about 15 weight percent of the gum, and preferably, about 0.2 to about 5%. Flavoring agents may include essential oils, synthetic flavors or mixtures thereof including, but not limited to, oils derived from plants and fruits such as citrus oils, fruit essences, peppermint oil, spearmint oil, other mint oils, clove oil, oil of wintergreen, anise and the like. Artificial flavoring agents and components may also be used. Natural and artificial flavoring agents may be combined in any sensorially acceptable fashion.

The use of medium chain triglycerides in the chewing gum formulation will improve flavor shelf life by reducing flavor oxidation. Additionally, medium chain triglycerides can be used in the chewing gum formulation as a flavor carrier.

The present invention, it is believed, can be used with a variety of processes for manufacturing chewing gum.

Chewing gum is generally manufactured by sequentially adding the various chewing gum ingredients to commercially available mixers known in the art. After the ingredients have been thoroughly mixed, the chewing gum mass is discharged from the mixer and shaped into the desired form, such as by rolling into sheets and cutting into sticks, extruding into chunks, or casting into pellets.

The present invention provides chewing gum having unique properties that improve the manufacturing process. In this regard, a chewing gum formulation constructed pursuant to the present invention will create chewing gum sticks having reduced stickiness. Therefore, the sticks of chewing gum will be easier to remove from each other. This will also improve wrapping of the chewing gum on high speed machines.

With respect to pellet chewing gum, the formulation of the present invention improves the manufacturing process. Pellets which are pillow-shaped are formed as sheets during manufacture. These sheets of pellets must be broken into single, individual, pellets before the pellets are coated and packaged. The chewing gum formulations of the present invention, because they include medium chain triglycerides allow the sheets of pellets to be broken into individual pieces more easily without damaging the pieces.

In manufacturing chewing gum, generally, the ingredients are mixed by first melting the gum base and adding it to the running mixer. The gum base may alternatively be melted in the mixer. Color and emulsifiers can be added at this time.

Medium chain triglycerides in its typical liquid form may be added to chewing gum during manufacture of the base. Medium chain triglycerides may be added at any time during processing of the base, but preferably, near the end of the batch to act as a softener.

Medium chain triglycerides may be added to conventional bases that contain wax or are wax-free bases, that may or may not contain polyvinyl acetate or terpene resins, or bases that contain natural gums or synthetic bases, bases that are non-tacky, or are bubble gum bases.

At levels of 0.02% to 20% by weight of the gum base, medium chain triglycerides may replace some or most of the partially hydrogenated or hydrogenated vegetable oils, mono- and di-glycerides, acetylated monoglycerides, or other softeners used in the gum base. Medium chain triglycerides may also be blended with the other softeners in the gum base and added during the base manufacturing process. A chewing gum base made with medium chain triglycerides will have greater oxidative stability due to the presence of medium chain triglycerides, and will give chewing gum a cleaner taste due to a reduction of off-tasting fats and oils.

Medium chain triglycerides may also be added to a chewing gum formulation in its liquid form or may be mixed with other gum or base softeners and added to a gum formulation during processing. Medium chain triglycerides may be added during the gum manufacturing at any time during processing, but preferably, early in the batch to allow thorough mixing with the gum base.

Medium chain triglycerides can be added to the chewing gum formulation so that they comprise 0.01% to 5% by weight of the chewing gum formulation. In a preferred embodiment, the medium chain triglycerides comprise 0.02% to 2% and most preferably, 0.05% to 0.5% by weight of the chewing gum formulation. Medium chain triglycerides may be blended with other softeners such as lecithin, glycerol triacetate, acetylated monoglycerides, mono- and di-glycerides, or other vegetable oils and fats that may be added to a gum formulation. When a solid softener is used, such as lecithin, medium chain triglycerides may act as a carrier or solvent for the particulate lecithin. It has been found that lecithin when mixed with medium chain triglycerides will allow for an easier dispersion of lecithin in a gum formulation. This should be contrasted with soy bean oil that is typically used as a carrier for lecithin. Unfortunately, soy bean oil has some off-taste and becomes rancid with time; but particulate lecithin in medium chain triglycerides gives a clean taste with good oxidation stability.

Medium chain triglycerides may also be blended with a wide range of natural and artificial flavor oils and act as a carrier for flavor oils. The clean, tasteless, and odorless properties of medium chain triglycerides makes them an excellent carrier for flavors such as spearmint, peppermint, cinnamon, wintergreen, and fruit flavors. The level of medium chain triglycerides mixed with flavors can vary over a wide range from approximately 1% to about 99% by weight since most gum flavors are oil soluble.

Medium chain triglycerides can also act as a carrier for artificial and natural colors such as in FD&C lake dispersions and natural esters like betacarotene and medium chain triglycerides eliminate the off-taste associated with fat/oil carriers and allows higher usage of color.

Medium chain triglycerides may also be used as a release agent for encapsulated flavors. Medium chain triglycerides can be added to an encapsulating media to allow for faster and easier dissolution of the encapsulating media.

Medium chain triglycerides may also have some effect as an emulsifier since medium chain triglycerides have a slight water solubility unlike concentrated fats and oils. Thus, medium chain triglycerides can be mixed with the flavor and carrier to provide an easier encapsulation of flavors.

By way of example, and not limitation, experiments and examples of the present invention will now be given:

EXPERIMENTS

Experiment No. 1

In this experiment, six sugar gum formulations were made in the lab using medium chain triglycerides at various levels and formed into pellets. The gum formulations were as follows:

|  | Ex. A | Ex. 1A | Ex. 2A | Ex. 3A | Ex. 4A | Ex. 5A |
|---|---|---|---|---|---|---|
| Gum Base | 19.2 | 19.2 | 19.2 | 19.2 | 19.2 | 19.2 |
| Sugar | 55.7 | 55.65 | 55.5 | 56.2 | 55.7 | 54.7 |
| Syrup (85% Solids) | 12.9 | 12.9 | 12.9 | 12.9 | 12.9 | 12.9 |
| Dextrose Monohydrate | 9.9 | 9.9 | 9.9 | 9.9 | 9.9 | 9.9 |
| Peppermint Flavor | 0.9 | 0.9 | 0.9 | 0.9 | 0.9 | 0.9 |
| Neobee M-5 | - | 0.05 | 0.2 | 0.5 | 1.0 | 2.0 |
| Glycerin | 1.4 | 1.4 | 1.4 | 0.4 | 0.4 | 0.4 |
|  | 100.0 | 100.0 | 100.0 | 100.0 | 100.0 | 100.0 |

The glycerin level was reduced in the formulations having higher levels of medium chain triglycerides to increase hardness. However, examples made with 0.4% glycerin were firmer than the other formulas, suggesting initial toughness was not effected by the level of medium chain triglycerides.

Sensory evaluations indicated the samples showed increased softness in the final texture with increased levels of medium chain triglycerides. Also, it was noted during storage and handling of the gum pellets in a plastic bag, that higher levels of medium chain triglycerides caused the pellets to break apart very easily compared to no or low levels of medium chain triglycerides.

Experiment No. 2

Another series of gum samples was made using the following formulas, but sheeted as stick gum to measure initial gum stiffness. Formulas were as follows:

|                         | Ex. B  | Ex. 6B | Ex. 7B | Ex. 8B |
|-------------------------|--------|--------|--------|--------|
| Gum Base                | 19.2   | 19.2   | 19.2   | 19.2   |
| Sugar                   | 56.10  | 55.85  | 55.35  | 54.60  |
| Syrup (85% solids)      | 12.9   | 12.9   | 12.9   | 12.9   |
| Dextrose Monohydrate    | 9.9    | 9.9    | 9.9    | 9.9    |
| Peppermint Flavor       | 0.9    | 0.9    | 0.9    | 0.9    |
| Neobee M-5 (MCTs)       | -      | 0.25   | 0.75   | 1.5    |
| Glycerin                | 1.0    | 1.0    | 1.0    | 1.0    |
|                         | 100.0  | 100.0  | 100.0  | 100.0  |
| Taber Stiffness (N=10)  | 21.7   | 34.8   | 28.3   | 21.9   |

Taber stiffness was measured by a Taber Stiffness Tester V-5 available from Taber Instrument Company of North Tonawanda, NY. Results show that initial stiffness was not affected by the level of medium chain triglycerides.
Sensory evaluation showed gum samples give softer final texture with increased level of medium chain triglycerides. Gum samples 7B and 8B also showed that the sticks pull apart from each other more easily than sticks from Example B and Example 6B.

EXAMPLES

The following contemplative examples of the invention and comparative examples are provided by way of explanation and illustration.
The formulas listed in Table I comprise various contemplative sugar formulas in which medium chain triglycerides can be added at various levels to gum.

TABLE 1

| (WEIGHT PERCENT) | | | | | | |
|-------------------|-------|-------|-------|-------|-------|-------|
|                   | Ex. 1 | Ex. 2 | Ex. 3 | Ex. 4 | Ex. 5 | Ex.6  |
| Sugar             | 61.55 | 61.5  | 61.35 | 62.5  | 62.0  | 61.0  |
| Base              | 19.2  | 19.2  | 19.2  | 19.2  | 19.2  | 19.2  |
| Corn Syrup        | 16.9  | 16.9  | 16.9  | 16.9  | 16.9  | 16.9  |
| Peppermint Flavor | 0.9   | 0.9   | 0.9   | 0.9   | 0.9   | 0.9   |
| Glycerin          | 1.4   | 1.4   | 1.4   | 0.0   | 0.0   | 0.0   |
| Neobee M-5        | 0.05  | 0.10  | 0.25  | 0.50  | 1.0   | 2.0   |

In Table 2, dextrose monohydrate is added to a sugar formula with various levels of medium chain triglycerides.

TABLE 2

|                      | Ex. 7  | Ex. 8  | Ex. 9  | Ex. 10 | Ex. 11 | Ex. 12 |
|----------------------|--------|--------|--------|--------|--------|--------|
| Sugar                | 55.65  | 55.6   | 55.45  | 56.2   | 55.7   | 54.7   |
| Base                 | 19.2   | 19.2   | 19.2   | 19.2   | 19.2   | 19.2   |
| Corn Syrup           | 12.9   | 12.9   | 12.9   | 12.9   | 12.9   | 12.9   |
| Glycerin             | 1.4    | 1.4    | 1.4    | 0.4    | 0.4    | 0.4    |
| Dextrose Monohydrate | 9.9    | 9.9    | 9.9    | 9.9    | 9.9    | 9.9    |
| Peppermint Flavor    | 0.9    | 0.9    | 0.09   | 0.9    | 0.9    | 0.9    |

TABLE 2 (continued)

|  | Ex. 7 | Ex. 8 | Ex. 9 | Ex. 10 | Ex. 11 | Ex. 12 |
|---|---|---|---|---|---|---|
| Neobee M-5 | 0.05 | 0.10 | 0.25 | 0.50 | 1.0 | 2.0 |

Examples 13-18 are the same as Examples 7-12 except that Neobee M-5 is pre-blended with the peppermint flavor and added to the gum formulation.

The following Tables 4 through 11 give examples of gum formulations demonstrating formula variations in which medium chain triglycerides, in the form of liquid oil, can be used.

Examples 19-23 in Table 4 demonstrate the use of medium chain triglycerides in low-moisture sugar formulations having less than 2% theoretical moisture:

TABLE 4

|  | Ex. 19 | Ex. 20 | Ex. 21 | Ex.22 | Ex.23 |
|---|---|---|---|---|---|
| Sugar | 58.75 | 58.6 | 58.3 | 52.7 | 51.9 |
| Gum Base | 19.2 | 19.2 | 19.2 | 19.2 | 19.2 |
| Corn Syrup[a] | 6.0 | 6.0 | 6.0 | 6.0 | 6.0 |
| Dextrose Monohydrate | 10.0 | 10.0 | 10.0 | 10.0 | 10.0 |
| Lactose | 0.0 | 0.0 | 0.0 | 5.0 | 5.0 |
| Glycerin[b] | 5.0 | 5.0 | 5.0 | 5.0 | 5.0 |
| Flavor | 0.9 | 0.9 | 0.9[d] | 0.9[d] | 0.9[d] |
| Lecithin[c] | 0.1 | 0.1 | 0.1 | 0.2 | --- |
| Neobee M-5[c] | 0.05 | 0.2 | 0.5[d] | 1.0[d] | 2.0[d] |

[a]Corn syrup is evaporated to 85% solids, 15% moisture.
[b]Glycerin and syrup can be blended and co-evaporated.
[c]Lecithin and Neobee M-5 can be pre-blended.
[d]Flavor and Neobee M-5 can be pre-blended.

Examples 24-28 in Table 5 demonstrate the use of medium chain triglycerides in medium-moisture sugar formulations having about 2% to about 5% moisture.

TABLE 5

|  | Ex.24 | Ex. 25 | Ex. 26 | Ex. 27 | Ex. 28 |
|---|---|---|---|---|---|
| Sugar | 53.35 | 53.2 | 52.9 | 52.3 | 51.5 |
| Gum Base | 19.2 | 19.2 | 19.2 | 19.2 | 19.2 |
| Corn Syrup[a] | 15.0 | 15.0 | 15.0 | 15.0 | 15.0 |
| Dextrose Monohydrate | 10.0 | 10.0 | 10.0 | 10.0 | 10.0 |
| Glycerin[b] | 1.4 | 1.4 | 1.4 | 1.4 | 1.4 |
| Flavor | 0.9[d] | 0.9[d] | 0.9[d] | 0.9[d] | 0.9[d] |
| Lecithin[c] | 0.1 | 0.1 | 0.1 | 0.2 | --- |
| Neobee M-5[c] | 0.05[d] | 0.2[d] | 0.5[d] | 1.0[d] | 2.0[d] |

[a]Corn syrup is evaporated to 85% solids, 15% moisture.
[b]Glycerin and syrup can be blended and co-evaporated.
[c]Neobee M-5 and Lecithin can be pre-blended.
[d]Flavor and Neobee M-5 can be pre-blended.

Examples 29-33 in Table 6 demonstrate the use of medium chain triglycerides in high moisture sugar formulations having more than about 5% moisture.

TABLE 6

|  | Ex. 29 | Ex. 30 | Ex. 31 | Ex. 32 | Ex. 33 |
|---|---|---|---|---|---|
| Sugar | 50.95 | 50.7 | 50.4 | 48.9 | 48.0 |
| Gum Base | 24.0 | 24.0 | 24.0 | 24.0 | 24.0 |
| Com Syrup | 24.0 | 24.0 | 24.0 | 24.6 | 24.6 |
| Glycerin | 0.0 | 0.0 | 0.0 | 0.4 | 0.4 |
| Flavor | 1.0 | 1.0 | 1.0 | 1.0 | 1.0 |
| Lecithin* | --- | 0.1 | 0.1 | 0.1 | --- |
| Neobee M-5 | 0.05 | 0.2 | 0.5 | 1.0 | 2.0 |

*Lecithin and Neobee M-5 can be pre-blended.

Examples 34-38 in Table 7 and Examples 39-48 in Tables 8 and 9 demonstrate the use of medium chain triglycerides in low- and high-moisture gums that are sugar-free. Low-moisture gums have less than about 2% moisture, and high-moisture gums have greater than 2% moisture.

TABLE 7

|  | Ex. 34 | Ex. 35 | Ex. 36 | Ex. 37 | Ex. 38 |
|---|---|---|---|---|---|
| Base | 25.5 | 25.5 | 25.5 | 25.5 | 25.5 |
| Sorbitol | 50.85 | 50.7 | 50.5 | 50.0 | 48.0 |
| Mannitol | 12.0 | 12.0 | 12.0 | 12.0 | 13.0 |
| Glycerin | 10.0 | 10.0 | 10.0 | 10.0 | 10.0 |
| Flavor | 1.5 | 1.5 | 1.5 | 1.5 | 1.5 |
| Lecithin* | 0.1 | 0.1 | --- | --- | --- |
| Neobee M-5 | 0.05 | 0.2 | 0.5 | 1.0 | 2.0 |

*Lecithin and Neobee M-5 can be pre-blended.
**Flavor and Neobee M-5 can be pre-blended.

TABLE 8

|  | Ex.39 | Ex. 40 | Ex. 41 | Ex. 42 | Ex. 43 |
|---|---|---|---|---|---|
| Base | 25.5 | 25.5 | 25.5 | 25.5 | 25.5 |
| Sorbitol | 50.95 | 50.8 | 50.5 | 51.9 | 49.8 |
| Sorbitol Liquid* | 10.0 | 10.0 | 10.0 | 10.0 | 11.0 |
| Mannitol | 10.0 | 10.0 | 10.0 | 10.0 | 10.0 |
| Glycerin | 2.0 | 2.0 | 2.0 | 0.0 | 0.0 |
| Flavor | 1.5 | 1.5 | 1.5 | 1.5 | 1.5 |
| Lecithin** | --- | --- | --- | 0.1 | 0.2 |
| Neobee M-5 | 0.05 | 0.2 | 0.5 | 1.0 | 2.0 |

*Sorbitol liquid contains 70% sorbitol, 30% water.
**Lecithin and Neobee M-5 can be pre-blended.
***Flavor and Neobee M-5 can be pre-blended.

TABLE 9

|  | Ex. 44 | Ex. 45 | Ex. 46 | Ex. 47 | Ex. 48 |
|---|---|---|---|---|---|
| Base | 25.5 | 25.5 | 25.5 | 25.5 | 25.5 |
| Sorbitol | 50.95 | 50.7 | 50.4 | 52.0 | 51.0 |
| HSH Syrup* | 10.0 | 10.0 | 10.0 | 10.0 | 10.0 |

*Lycasin brand hydrogenated starch hydrolyzate syrup.

TABLE 9   (continued)

|  | Ex. 44 | Ex. 45 | Ex. 46 | Ex. 47 | Ex. 48 |
|---|---|---|---|---|---|
| Mannitol | 8.0 | 8.0 | 8.0 | 8.0 | 9.0 |
| Glycerin** | 4.0 | 4.0 | 4.0 | 2.0 | 1.0 |
| Flavor | 1.5 | 1.5 | 1.5 | 1.5 | 1.5 |
| Lecithin*** | --- | 0.1 | 0.1 | --- | --- |
| Neobee M-5**** | 0.05 | 0.2 | 0.5 | 1.0 | 2.0 |

**Glycerin and HSH syrup may be blended or co-evaporated.

***Lecithin and Neobee M-5 can be pre-blended.

****Flavor and Neobee M-5 can be pre-blended.

Table 10 shows sugar chewing gum formulations that can be made with medium chain triglycerides and various types of sugars.

## TABLE 10

|  | Ex. 49 | Ex. 50 | Ex. 51 | Ex. 52 | Ex. 53 | Ex. 54 |
|---|---|---|---|---|---|---|
| Gum Base | 19.2 | 19.2 | 19.2 | 19.2 | 19.2 | 19.2 |
| Sucrose | 49.4 | 48.5 | 44.4 | 43.5 | 34.4 | 43.5 |
| Glycerin | 1.4 | 1.4 | 1.4 | 1.4 | 1.4 | 1.4 |
| Corn Syrup | 14.0 | 14.0 | 14.0 | 14.0 | 14.0 | 14.0 |
| Dextrose | 5.0 | 5.0 | --- | --- | 10.0 | 5.0 |
| Lactose | 5.0 | 5.0 | 10.0 | 10.0 | --- | --- |
| Fructose | 5.0 | 5.0 | 10.0 | 10.0 | 10.0 | 5.0 |
| Invert Sugar | --- | --- | --- | --- | 10.0 | 10.0 |
| Maltose | --- | --- | --- | --- | --- | --- |
| Corn Syrup Solids | --- | --- | --- | --- | --- | --- |
| Peppermint Flavor | 0.9 | 0.9 | 0.9 | 0.9 | 0.9 | 0.9 |

| | | | | | | |
|---|---|---|---|---|---|---|
| Neobee M-5 | 0.1 | 1.0 | 0.1 | 1.0 | 0.1 | 1.0 |
| | Ex. 55 | Ex. 56 | Ex. 57 | Ex. 58 | Ex. 59 | Ex. 60 |
| Gum Base | 19.2 | 19.2 | 19.2 | 19.2 | 19.2 | 19.2 |
| Sucrose | 34.4 | 43.5 | 34.4 | 43.5 | 42.4 | 46.5 |
| Glycerin | 1.4 | 1.4 | 1.4 | 1.4 | 1.4 | 1.4 |
| Corn Syrup | 14.0 | 14.0 | 14.0 | 14.0 | 11.0 | 11.0 |
| Dextrose | 10.0 | 5.0 | 10.0 | 5.0 | 10.0 | 5.0 |
| Lactose | --- | --- | --- | --- | --- | --- |
| Fructose | 10.0 | 5.0 | 10.0 | 5.0 | 5.0 | 5.0 |
| Invert Sugar | 10.0 | 10.0 | --- | --- | 5.0 | 5.0 |
| Maltose | --- | --- | 10.0 | 10.0 | --- | --- |
| Corn Syrup Solids | --- | --- | --- | --- | 5.0 | 5.0 |
| Peppermint Flavor | 0.9 | 0.9 | 0.9 | 0.9 | 0.9 | 0.9 |
| Neobee M-5 | 0.1 | 1.0 | 0.1 | 1.0 | 0.1 | 1.0 |

| | Ex. 61 | Ex. 62 |
|---|---|---|
| Gum Base | 19.2 | 19.2 |
| Sucrose | 42.4 | 36.5 |
| Glycerin | 6.4 | 6.4 |
| Corn Syrup | 11.0 | 11.0 |
| Dextrose | 5.0 | 5.0 |
| Lactose | | |
| Fructose | 5.0 | 5.0 |
| Invert Sugar | 5.0 | 5.0 |
| Maltose | --- | --- |
| Corn Syrup Solids | 5.0* | 10.0* |
| Peppermint Flavor | 0.9 | 0.9 |
| Neobee M-5 | 0.1 | 1.0 |

*5-25DE maltodextrin can be used.

Table 11 shows chewing gum formulations that are free of sugar. These formulations can use a wide variety of other non-sugar alditols.

## TABLE 11

### (WEIGHT PERCENT)

| | Ex. 63 | Ex. 64 | Ex. 65 | Ex. 66 | Ex. 67 | Ex. 68 |
|---|---|---|---|---|---|---|
| Gum Base | 25.5 | 25.5 | 25.5 | 25.5 | 25.5 | 25.5 |
| Glycerin | 2.0 | 2.0 | 2.0 | 2.0 | 2.0 | 2.0 |
| Sorbitol | 43.9 | 43.0 | 43.9 | 38.0 | 37.9 | 39.0 |
| Mannitol | --- | 10.0 | 10.0 | 10.0 | 10.0 | 6.0 |
| Sorbitol Liquid | 17.0 | 17.0 | --- | --- | --- | --- |
| Lycasin | --- | --- | 17.0 | 12.0 | 8.0 | 10.0 |
| Maltitol | 10.0 | --- | --- | 10.0 | --- | --- |
| Xylitol | --- | --- | --- | --- | 15.0 | 15.0 |
| Lactitol | --- | --- | --- | --- | --- | --- |
| Palatinit | --- | --- | --- | --- | --- | --- |
| Flavor | 1.5 | 1.5 | 1.5 | 1.5 | 1.5 | 1.5 |
| Neobee M-5 | 0.1 | 1.0 | 0.1 | 1.0 | 0.1 | 1.0 |

## TABLE 11 (Cont'd)

### (WEIGHT PERCENT)

| | Ex. 69 | Ex. 70 | Ex. 71 | Ex. 72 | Ex. 73 | Ex. 74 |
|---|---|---|---|---|---|---|
| Gum Base | 25.5 | 25.5 | 25.5 | 25.5 | 25.5 | 25.5 |
| Glycerin | 8.0 | 8.0 | 8.0 | 2.0 | 1.0 | 0.0 |
| Sorbitol | 41.9 | 36.0 | 31.9 | 40.0 | 26.9 | 21.0 |
| Mannitol | 8.0 | 8.0 | 8.0 | --- | --- | --- |
| Sorbitol Liquid | 5.0 | --- | --- | --- | --- | --- |
| Lycasin | --- | 5.0 | 5.0 | 5.0 | 10.0 | 10.0 |
| Maltitol | --- | 5.0 | --- | --- | --- | --- |
| Xylitol | --- | --- | --- | 15.0 | 10.0 | 20.0 |
| Lactitol | 10.0 | 10.0 | 10.0 | --- | --- | --- |
| Palatinit | --- | --- | 10.0 | 10.0 | 25.0 | 21.0 |
| Flavor | 1.5 | 1.5 | 1.5 | 1.5 | 1.5 | 1.5 |
| Neobee M-5 | 0.1 | 1.0 | 0.1 | 1.0 | 0.1 | 1.0 |

The following examples of the invention are also shown in Table 12 for natural and synthetic gum bases with wax, Table 13 for chewing gum bases that are wax-free and have some reduced tack properties, Table 14 for wax free bubble gum bases, and Table 15 for wax-free gum bases having non-tack characteristics. These examples illustrate how medium chain triglycerides can be added to a wide variety of chewing gum bases to partially replace some of the oils, fats, and base softeners.

## TABLE 12

## NATURAL AND SYNTHETIC BASES WITH WAX

## (WEIGHT PERCENT)

|  | Ex. 75 | Ex. 76 | Ex. 77 |
|---|---|---|---|
| Butyl Rubber | 11.7 | 10.0 | 9.0 |
| Styrene Butadiene Rubber | --- | --- | --- |
| Polyisobutylene | --- | 10.4 | 5.3 |
| Jelutong | --- | --- | --- |
| Ester Gum | 14.8 | --- | --- |
| Terpene Resin | 9.9 | 6.8 | 16.7 |
| Low MW Polyvinylacetate | 21.2 | 23.2 | 24.6 |
| High MW Polyvinylacetate | --- | --- | --- |
| Talc | --- | --- | --- |
| Calcium Carbonate | 11.2 | 14.7 | 20.1 |
| Acetylated Monoglyceride | --- | --- | --- |
| Hydrogenated Cotton Seed Oil | --- | 10.0 | 3.3 |
| Hydrogenated Soybean Oil | 9.0 | 11.1 | 3.3 |
| Partially Hydrogenated Soybean and Palm Oil | --- | 2.3 | --- |
| Partially Hydrogenated Cottonseed Oil | --- | --- | --- |

| | | | |
|---|---|---|---|
| Neobee M-5 | 5.7 | 4.3 | 4.2 |
| Lecithin | 2.7 | — | 0.8 |
| Glycerol Monostearate | 4.8 | 4.1 | 4.2 |
| Triacetin | — | — | — |
| Microcrystalline Wax (MP 180°F) | 6.0 | 3.1 | 8.5 |
| Paraffin Wax (MP 135°F) | 3.0 | — | — |
| | 100.0 | 100.0 | 100.0 |

## BUBBLE BASES

| | Ex. 78 | Ex. 79 | Ex. 80 |
|---|---|---|---|
| Butyl Rubber | — | — | 2.5 |
| Styrene Butadiene Rubber | 10.3 | 1.6 | — |
| Polyisobutylene | — | 9.1 | 9.0 |
| Jelutong | — | — | — |
| Ester Gum | 24.7 | 22.5 | 15.0 |
| Terpene Resin | — | — | — |
| Low MW Polyvinylacetate | — | — | — |
| High MW Polyvinylacetate | — | 30.0 | 24.1 |
| Talc | — | — | 25.4 |
| Calcium Carbonate | 56.8 | 21.7 | — |
| Acetylated Monoglyceride | — | — | 4.0 |
| Hydrogenated Cotton Seed Oil | 1.5 | — | — |
| Hydrogenated Soybean Oil | — | — | — |
| Partially Hydrogenated Soybean and Palm Oil | — | 2.0 | — |
| Partially Hydrogenated Cottonseed Oil | — | — | — |
| Neobee M-5 | 1.5 | 1.5 | 2.0 |
| Lecithin | — | — | 1.5 |
| Glycerol Monostearate | 1.1 | — | 7.1 |
| Triacetin | — | 4.5 | 3.2 |
| Microcrystalline Wax (MP 180°F) | — | — | 1.2 |
| Paraffin Wax (MP 135°F) | 4.1 | 7.1 | 5.0 |
| | 100.0 | 100.0 | 100.0 |

| | Ex. 81 | Ex. 82 | Ex. 83 |
|---|---|---|---|
| Butyl Rubber | 6.8 | 6.8 | 8.8 |
| Styrene Butadiene Rubber | — | — | — |
| Polyisobutylene | 3.0 | 3.2 | 4.1 |
| Jelutong | 21.1 | 18.2 | 4.0 |
| Ester Gum | 16.7 | 16.6 | — |
| Terpene Resin | — | — | 17.3 |
| Low MW Polyvinylacetate | 16.6 | 16.1 | 25.0 |
| High MW Polyvinylacetate | — | — | — |
| Talc | — | — | 18.1 |
| Calcium Carbonate | 13.2 | 19.7 | — |
| Acetylated Monoglyceride | — | — | — |
| Hydrogenated Cotton Seed Oil | 2.3 | — | 4.5 |
| Hydrogenated Soybean Oil | — | 3.2 | 2.7 |
| Partially Hydrogenated Soybean and Palm Oil | — | — | — |
| Partially Hydrogenated Cottonseed Oil | — | 2.0 | — |
| Neobee M-5 | 3.0 | 1.8 | 3.3 |
| Lecithin | — | — | — |
| Glycerol Monostearate | 2.1 | 4.5 | 4.1 |
| Triacetin | — | — | — |
| Microcrystalline Wax (MP 180°F) | 15.2 | 6.8 | 6.1 |
| Paraffin Wax (MP 135°F) | — | 1.1 | 2.0 |
| | 100.0 | 100.0 | 100.0 |

| | Ex. 84 Bubble Base | Ex. 85 | Ex. 86 |
|---|---|---|---|
| Butyl Rubber | --- | 9.1 | 9.3 |
| Styrene Butadiene Rubber | --- | --- | --- |
| Polyisobutylene | 8.0 | 3.5 | 10.5 |
| Jelutong | --- | 3.1 | --- |
| Ester Gum | 14.7 | 1.5 | --- |
| Terpene Resin | --- | 15.0 | 13.0 |
| Low MW Polyvinylacetate | --- | 22.8 | 23.0 |
| High MW Polyvinylacetate | 34.5 | --- | --- |
| Talc | 28.6 | --- | --- |
| Calcium Carbonate | --- | 23.0 | 14.9 |
| Acetylated Monoglyceride | 2.5 | --- | --- |
| Hydrogenated Cotton Seed Oil | --- | 4.6 | 8.0 |
| Hydrogenated Soybean Oil | --- | 2.9 | 5.2 |
| Partially Hydrogenated Soybean and Palm Oil | --- | --- | 3.1 |
| Partially Hydrogenated Cottonseed Oil | --- | --- | 1.5 |
| Neobee M-5 | 0.9 | 2.4 | 2.1 |
| Lecithin | --- | 0.8 | --- |
| Glycerol Monostearate | 4.4 | 2.8 | 4.5 |
| Triacetin | 4.6 | --- | --- |
| Microcrystalline Wax (MP 180°F) | --- | 7.0 | 4.4 |
| Paraffin Wax (MP 135°F) | 1.8 | 1.5 | 0.5 |
| | 100.0 | 100.0 | 100.0 |

| | Ex. 87 | Ex. 88 | Ex. 89 Bubble Base |
|---|---|---|---|
| Butyl Rubber | 6.1 | 8.1 | — |
| Styrene Butadiene Rubber | — | — | 6.0 |
| Polyisobutylene | 7.1 | 5.5 | 7.5 |
| Jelutong | — | — | — |
| Ester Gum | — | 7.1 | 12.2 |
| Terpene Resin | 14.1 | 7.1 | — |
| Low MW Polyvinylacetate | 28.1 | 22.2 | — |
| High MW Polyvinylacetate | — | — | 29.0 |
| Talc | — | — | 28.9 |
| Calcium Carbonate | 18.9 | 25.6 | — |
| Acetylated Monoglyceride | — | — | 3.7 |
| Hydrogenated Cotton Seed Oil | 10.1 | 13.2 | 2.7 |
| Hydrogenated Soybean Oil | 5.1 | 5.1 | — |
| Partially Hydrogenated Soybean and Palm Oil | — | — | — |
| Partially Hydrogenated Cottonseed Oil | — | — | — |
| Neobee M-5 | 4.1 | 4.1 | 1.3 |
| Lecithin | 0.7 | 0.5 | — |
| Glycerol Monostearate | 1.5 | 1.5 | 3.1 |
| Triacetin | — | — | 1.2 |
| Microcrystalline Wax (MP 180°F) | 3.1 | — | 4.4 |
| Paraffin Wax (MP 135°F) | 1.1 | — | — |
| | 100.0 | 100.0 | 100.0 |

## TABLE 13: WAX-FREE GUM BASES FOR USE IN CHEWING GUM HAVING SOME REDUCED TACK CHARACTERISTICS (EXAMPLES 90-119)

### EXAMPLES 90-94

| IDENTIFICATION - EXAMPLES #: GENERIC INGREDIENTS | 90 | 91 | 92 | 93 | 94 |
|---|---|---|---|---|---|
| ** SYNTHETIC ELASTOMER ** | | | | | |
| STYRENE-BUTADIENE ELASTOMER | 5.3 | -- | 2.1 | 1.8 | -- |
| BUTYL (ISOPRENE-ISOBUTYLENE) ELASTOMER | 8.6 | 7.9 | 7.2 | -- | 8.1 |
| POLYISOBUTYLENE ELASTOMER | 7.1 | -- | 7.4 | 24.8 | 3.6 |
| POLYVINYL ACETATE | 10.5 | 27.2 | 15.3 | 10.1 | 27.3 |
| ** ELASTOMER PLASTICIZERS ** | | | | | |
| GLYCEROL ESTERS OF ROSIN | 2.1 | -- | 19.0 | 3.7 | -- |
| GLYCEROL ESTERS OF PART HYD ROSIN | 4.3 | 18.2 | -- | 7.9 | -- |
| TERPENE RESINS | 10.8 | -- | -- | 7.1 | 26.8 |
| ** FILLER ** | | | | | |
| CALCIUM CARBONATE | -- | 15.9 | 20.7 | 17.7 | 11.4 |
| TALC | 25.5 | -- | -- | -- | -- |
| ** SOFTENER ** | | | | | |
| HYDROGENATED COTTONSEED OIL | -- | 6.0 | -- | 7.0 | -- |
| HYDROGENATED SOYBEAN OIL | 4.3 | -- | 6.1 | -- | -- |
| PARTIALLY HYDROGENATED SOYBEAN AND PALM OIL | 3.3 | -- | 6.0 | -- | 9.1 |
| PARTIALLY HYDROGENATED COTTONSEED OIL | -- | 5.3 | -- | 7.0 | -- |

| | | | | | |
|---|---|---|---|---|---|
| NEOBEE M-5 | 7.7 | 11.3 | 12.2 | 7.0 | 5.2 |
| GLYCEROL MONOSTEARATE | 8.2 | 7.4 | 4.0 | 3.5 | 4.8 |
| LECITHIN | 2.3 | 0.8 | – | 2.4 | 3.7 |
| TOTAL PERCENT | 100.0 | 100.0 | 100.0 | 100.0 | 100.0 |

## EXAMPLES 95-97

| IDENTIFICATION - EXAMPLES #:<br>GENERIC INGREDIENTS | 95 | 96 | 97 |
|---|---|---|---|
| ** SYNTHETIC ELASTOMER ** | | | |
| STYRENE-BUTADIENE ELASTOMER | 5.2 | 2.1 | 5.9 |
| BUTYL (ISOPRENE-ISOBUTYLENE) ELASTOMER | 4.1 | 7.2 | 6.9 |
| POLYISOBUTYLENE ELASTOMER | 5.9 | 7.3 | 2.0 |
| POLYVINYL ACETATE | 25.7 | 15.3 | 24.8 |
| ** ELASTOMER PLASTICIZERS ** | | | |
| GLYCEROL ESTERS OF ROSIN | 23.5 | 19.1 | 8.6 |
| GLYCEROL ESTERS OF PART HYD ROSIN | -- | -- | 8.0 |
| TERPENE RESINS | 3.2 | -- | 1.9 |
| ** FILLER ** | | | |
| CALCIUM CARBONATE | 15.1 | 20.7 | 9.9 |
| TALC | -- | -- | 7.2 |
| ** SOFTENER ** | | | |
| HYDROGENATED COTTONSEED OIL | -- | -- | 7.0 |
| HYDROGENATED SOYBEAN OIL | -- | -- | -- |
| PARTIALLY HYDROGENATED SOYBEAN AND PALM OIL | 5.5 | 8.3 | 10.1 |
| PARTIALLY HYDROGENATED COTTONSEED OIL | 3.0 | 9.6 | -- |
| NEOBEE M-5 | 3.7 | 6.4 | 4.0 |
| GLYCEROL MONOSTEARATE | 5.1 | 4.0 | 3.7 |
| LECITHIN | -- | -- | -- |
| TOTAL PERCENT | 100.0 | 100.0 | 100.0 |

## EXAMPLES 98-101

| IDENTIFICATION - EXAMPLES #:<br>GENERIC INGREDIENTS | 98 | 99 | 100 | 101 |
|---|---|---|---|---|
| ** SYNTHETIC ELASTOMER ** | | | | |
| STYRENE-BUTADIENE ELASTOMER | 3.9 | 2.1 | -- | -- |
| BUTYL (ISOPRENE-ISOBUTYLENE) ELASTOMER | 5.3 | 6.0 | 8.9 | 3.6 |
| POLYISOBUTYLENE ELASTOMER | 12.7 | 8.5 | 10.0 | 11.1 |
| POLYVINYL ACETATE | 14.9 | 15.3 | 21.3 | 21.9 |
| ** ELASTOMER PLASTICIZERS ** | | | | |
| GLYCEROL ESTERS OF ROSIN | -- | 10.1 | -- | 19.6 |
| GLYCEROL ESTERS OF PART HYD ROSIN | -- | 8.9 | -- | 11.2 |
| TERPENE RESINS | 21.4 | -- | 9.7 | 3.7 |
| ** FILLER ** | | | | |
| CALCIUM CARBONATE | 13.7 | 20.9 | 21.5 | 6.4 |
| TALC | 1.4 | -- | -- | -- |
| ** SOFTENER ** | | | | |
| HYDROGENATED COTTONSEED OIL | -- | 4.2 | -- | 5.0 |
| HYDROGENATED SOYBEAN OIL | 1.7 | -- | 5.0 | -- |
| PARTIALLY HYDROGENATED SOYBEAN<br>AND PALM OIL | -- | -- | -- | 10 |
| PARTIALLY HYDROGENATED COTTONSEED OIL | -- | -- | 15.0 | -- |
| NEOBEE M-5 | 17.0 | 20.0 | 3.2 | 4.2 |
| GLYCEROL MONOSTEARATE | 5.7 | 4.0 | 5.4 | 3.3 |
| LECITHIN | 2.3 | -- | -- | -- |
| TOTAL PERCENT | 100.0 | 100.0 | 100.0 | 100.0 |

## EXAMPLES 102-106

| IDENTIFICATION - EXAMPLES #:<br>GENERIC INGREDIENTS | 102 | 103 | 104 | 105 | 106 |
|---|---|---|---|---|---|
| ** SYNTHETIC ELASTOMER ** | | | | | |
| STYRENE-BUTADIENE ELASTOMER | -- | 3.2 | 4.1 | -- | -- |
| BUTYL (ISOPRENE-ISOBUTYLENE) ELASTOMER | 7.4 | 7.3 | 11.3 | 10.0 | 8.3 |
| POLYISOBUTYLENE ELASTOMER | 1.9 | 7.5 | 7.9 | 1.9 | 3.6 |
| POLYVINYL ACETATE | 24.8 | 21.1 | 18.2 | 27.6 | 27.5 |
| ** ELASTOMER PLASTICIZERS ** | | | | | |
| GLYCEROL ESTERS OF ROSIN | -- | 15.3 | -- | -- | -- |
| GLYCEROL ESTERS OF PART HYD ROSIN | -- | 2.4 | 26.2 | -- | -- |
| TERPENE RESINS | 25.8 | 5.8 | 1.4 | 25.3 | 25.3 |
| ** FILLER ** | | | | | |
| CALCIUM CARBONATE | 18.6 | -- | 13.6 | 11.3 | 11.3 |
| TALC | -- | 14.8 | -- | -- | -- |
| ** SOFTENER ** | | | | | |
| HYDROGENATED COTTONSEED OIL | 2.0 | 4.4 | 1.2 | -- | -- |
| HYDROGENATED SOYBEAN OIL | -- | -- | -- | 2.4 | 4.0 |
| PARTIALLY HYDROGENATED SOYBEAN AND PALM OIL | -- | 4.0 | -- | -- | 4.2 |
| PARTIALLY HYDROGENATED COTTONSEED OIL | -- | -- | -- | -- | -- |
| NEOBEE M-5 | 10.3 | 11.4 | 7.0 | 13.0 | 8.3 |

| GLYCEROL MONOSTEARATE | 4.4 | 2.8 | 5.2 | 4.8 | 4.8 |
| --- | --- | --- | --- | --- | --- |
| LECITHIN | 4.8 | -- | 3.9 | 3.7 | 2.7 |
| TOTAL PERCENT | 100.0 | 100.0 | 100.0 | 100.0 | 100.0 |

## EXAMPLES 107-110

| IDENTIFICATION - EXAMPLES #: GENERIC INGREDIENTS | 107 | 108 | 109 | 110 |
|---|---|---|---|---|
| ** NATURAL ELASTOMER ** | | | | |
| NATURAL GUM | 22.0 | 25.1 | 22.8 | 17.6 |
| ** SYNTHETIC ELASTOMER ** | | | | |
| STYRENE-BUTADIENE ELASTOMER | -- | 1.9 | 2.6 | -- |
| BUTYL (ISOPRENE-ISOBUTYLENE) ELASTOMER | 4.8 | 2.1 | 4.1 | 10.2 |
| POLYISOBUTYLENE ELASTOMER | 5.7 | 4.7 | 3.2 | 2.1 |
| POLYVINYL ACETATE | 16.4 | 24.8 | 16.3 | 26.9 |
| ** ELASTOMER PLASTICIZERS ** | | | | |
| GLYCEROL ESTERS OF ROSIN | 3.8 | 3.2 | 6.9 | 11.3 |
| GLYCEROL ESTERS OF PART HYD ROSIN | 12.3 | 12.6 | 11.8 | 4.8 |
| METHYL ESTERS OF ROSIN | -- | 2.1 | 1.7 | -- |
| TERPENE RESINS | -- | -- | -- | -- |
| ** FILLER ** | | | | |
| CALCIUM CARBONATE | -- | 4.4 | 9.3 | -- |
| TALC | 7.1 | -- | -- | 4.6 |
| ** SOFTENER ** | | | | |
| HYDROGENATED COTTONSEED OIL | -- | -- | 10.0 | -- |
| HYDROGENATED SOYBEAN OIL | 5.0 | -- | -- | 5.6 |
| PARTIALLY HYDROGENATED SOYBEAN AND PALM OIL | 11.0 | 12.0 | 3.7 | 5.0 |
| PARTIALLY HYDROGENATED COTTONSEED OIL | 5.0 | -- | -- | -- |

| | | | | |
|---|---|---|---|---|
| NEOBEE M-5 | 0.8 | 0.6 | 4.5 | 5.6 |
| GLYCEROL MONOSTEARATE | 6.1 | 3.8 | -- | 6.3 |
| LECITHIN | -- | 2.7 | 3.1 | -- |
| TOTAL PERCENT | 100.0 | 100.0 | 100.0 | 100.0 |

## EXAMPLES 111-114

| IDENTIFICATION - EXAMPLES #:<br>GENERIC INGREDIENTS | 111 | 112 | 113 | 114 |
|---|---|---|---|---|
| ** NATURAL ELASTOMER ** | | | | |
| NATURAL GUM | 15.7 | 22.6 | 22.2 | 21.1 |
| ** SYNTHETIC ELASTOMER ** | | | | |
| STYRENE-BUTADIENE ELASTOMER | 1.9 | -- | -- | -- |
| BUTYL (ISOPRENE-ISOBUTYLENE) ELASTOMER | 3.7 | 5.8 | 5.7 | 6.1 |
| POLYISOBUTYLENE ELASTOMER | 4.1 | 3.1 | 3.1 | 2.8 |
| POLYVINYL ACETATE | 26.2 | 20.4 | 22.0 | 18.0 |
| ** ELASTOMER PLASTICIZERS ** | | | | |
| GLYCEROL ESTERS OF ROSIN | -- | -- | -- | 15.7 |
| GLYCEROL ESTERS OF PART HYD ROSIN | 15.3 | 11.7 | 15.2 | -- |
| METHYL ESTERS OF ROSIN | -- | 4.0 | -- | -- |
| TERPENE RESINS | -- | -- | -- | -- |
| ** FILLER ** | | | | |
| CALCIUM CARBONATE | 12.2 | 11.6 | 11.4 | -- |
| TALC | -- | -- | -- | 15.4 |
| ** SOFTENER ** | | | | |
| HYDROGENATED COTTONSEED OIL | -- | 2.0 | -- | 9.1 |
| HYDROGENATED SOYBEAN OIL | 3.0 | -- | 6.2 | -- |
| PARTIALLY HYDROGENATED SOYBEAN AND PALM OIL | -- | 15.0 | -- | -- |
| PARTIALLY HYDROGENATED COTTONSEED OIL | 12.0 | -- | 6.0 | -- |

| | | | | |
|---|---|---|---|---|
| NEOBEE M-5 | 0.1 | 0.5 | 4.9 | 6.0 |
| GLYCEROL MONOSTEARATE | 5.8 | 3.3 | 3.3 | 5.8 |
| LECITHIN | -- | -- | -- | -- |
| TOTAL PERCENT | 100.0 | 100.0 | 100.0 | 100.0 |

## EXAMPLES 115-119

| IDENTIFICATION - EXAMPLES #: GENERIC INGREDIENTS | 115 | 116 | 117 | 118 | 119 |
|---|---|---|---|---|---|
| ** NATURAL ELASTOMER ** | | | | | |
| NATURAL GUM | 23.8 | 18.7 | 14.4 | 18.2 | 25.2 |
| ** SYNTHETIC ELASTOMER ** | | | | | |
| STYRENE-BUTADIENE ELASTOMER | -- | -- | -- | -- | -- |
| BUTYL (ISOPRENE-ISOBUTYLENE) ELASTOMER | 3.1 | 6.0 | 9.1 | 6.8 | 2.4 |
| POLYISOBUTYLENE ELASTOMER | 7.7 | 5.5 | 3.6 | 5.4 | 4.9 |
| POLYVINYL ACETATE | 20.5 | 14.8 | 18.1 | 15.5 | 19.9 |
| ** ELASTOMER PLASTICIZERS ** | | | | | |
| GLYCEROL ESTERS OF ROSIN | -- | -- | 11.9 | -- | 15.6 |
| GLYCEROL ESTERS OF PART HYD ROSIN | 10.4 | 15.5 | 13.0 | 12.7 | -- |
| METHYL ESTERS OF ROSIN | 2.0 | -- | -- | 2.6 | -- |
| TERPENE RESINS | 5.1 | -- | -- | -- | 2.1 |
| ** FILLER ** | | | | | |
| CALCIUM CARBONATE | -- | 18.8 | 14.1 | 15.7 | -- |
| TALC | 5.3 | -- | -- | -- | 7.1 |
| ** SOFTENER ** | | | | | |
| HYDROGENATED COTTONSEED OIL | -- | 6.5 | 7.0 | -- | -- |
| HYDROGENATED SOYBEAN OIL | 7.9 | -- | -- | 5.0 | 10.0 |
| PARTIALLY HYDROGENATED SOYBEAN AND PALM OIL | -- | -- | 2.0 | -- | -- |
| PARTIALLY HYDROGENATED COTTONSEED OIL | -- | -- | -- | 6.0 | -- |

| NEOBEE M-5 | 7.9 | 6.5 | 6.8 | 5.0 | 8.4 |
|---|---|---|---|---|---|
| GLYCEROL MONOSTEARATE | 6.3 | 7.7 | -- | 7.1 | 4.4 |
| LECITHIN | -- | -- | -- | -- | -- |
| TOTAL PERCENT | 100.0 | 100.0 | 100.0 | 100.0 | 100.0 |

## TABLE 14: WAX-FREE GUM BASES FOR USE IN BUBBLE GUM (EXAMPLES 120-128)

### EXAMPLES 120-123

| IDENTIFICATION - EXAMPLES #:<br>GENERIC INGREDIENTS | 120 | 121 | 122 | 123 |
|---|---|---|---|---|
| ** SYNTHETIC ELASTOMER ** | | | | |
| POLYISOBUTYLENE ELASTOMER | 17.1 | 11.7 | 11.6 | 5.4 |
| POLYVINYL ACETATE | 24.9 | 29.4 | 31.5 | 34.8 |
| ** ELASTOMER PLASTICIZERS ** | | | | |
| GLYCEROL ESTERS OF ROSIN | 6.8 | 10.7 | 19.8 | 16.3 |
| GLYCEROL ESTERS OF PART HYD ROSIN | -- | -- | -- | -- |
| ** FILLER ** | | | | |
| CALCIUM CARBONATE | -- | -- | -- | 30.2 |
| TALC | 34.7 | 34.1 | 21.9 | -- |
| ** SOFTENER ** | | | | |
| NEOBEE M-5 | 1.1 | 3.4 | 3.0 | 2.0 |
| GLYCEROL TRIACETATE | 4.6 | 4.4 | 5.0 | 5.3 |
| GLYCEROL MONOSTEARATE | 5.8 | 4.3 | 4.9 | 3.9 |
| ACETYLATED MONOGLYCERIDE | 5.0 | 2.0 | 2.3 | 2.1 |
| TOTAL PERCENT | 100.0 | 100.0 | 100.0 | 100.0 |

## EXAMPLES 124-128

| IDENTIFICATION - EXAMPLES #: GENERIC INGREDIENTS | 124 | 125 | 126 | 127 | 128 |
|---|---|---|---|---|---|
| ** SYNTHETIC ELASTOMER ** | | | | | |
| POLYISOBUTYLENE ELASTOMER | 7.9 | 13.0 | 7.9 | 11.6 | 11.8 |
| POLYVINYL ACETATE | 34.2 | 37.1 | 34.2 | 37.8 | 35.6 |
| ** ELASTOMER PLASTICIZERS ** | | | | | |
| GLYCEROL ESTERS OF ROSIN | 14.8 | -- | -- | -- | -- |
| GLYCEROL ESTERS OF PART HYD ROSIN | -- | 19.8 | 14.8 | 19.8 | 19.8 |
| ** FILLER ** | | | | | |
| CALCIUM CARBONATE | 29.8 | 16.5 | 29.8 | -- | -- |
| TALC | -- | -- | -- | 17.0 | 19.7 |
| ** SOFTENER ** | | | | | |
| NEOBEE M-5 | 0.5 | 1.5 | 1.0 | 2.6 | 0.8 |
| GLYCEROL TRIACETATE | 5.3 | 5.6 | 4.3 | 3.0 | 4.0 |
| GLYCEROL MONOSTEARATE | 4.5 | 6.5 | 5.0 | 3.2 | 2.3 |
| ACETYLATED MONOGLYCERIDE | 3.0 | -- | 3.0 | 5.0 | 6.0 |
| TOTAL PERCENT | 100.0 | 100.0 | 100.0 | 100.0 | 100.0 |

## TABLE 15: WAX-FREE GUM BASES FOR USE IN CHEWING GUM HAVING NON-TACK CHARACTERISTICS (EXAMPLES 129-140)

### EXAMPLES 129-134

| IDENTIFICATION - EXAMPLES #:<br>GENERIC INGREDIENTS | 129 | 130 | 131 | 132 | 133 | 134 |
|---|---|---|---|---|---|---|
| ** SYNTHETIC ELASTOMER ** | | | | | | |
| BUTYL (ISOPRENE-ISOBUTYLENE)<br>ELASTOMER | — | — | — | 25.0 | 9.0 | 14.1 |
| POLYISOBUTYLENE | 35.0 | 17.0 | 20.0 | — | 16.9 | 12.1 |
| POLYVINYL ACETATE | — | 17.0 | 30.0 | 5.0 | 22.8 | 20.8 |
| ** FILLER ** | | | | | | |
| CALCIUM CARBONATE | 25.0 | 40.0 | 5.0 | 25.0 | — | 13.9 |
| TALC | — | — | — | — | 12.0 | — |
| ** SOFTENERS ** | | | | | | |
| HYDROGENATED SOYBEAN OIL | 5.0 | — | 15.0 | — | 14.8 | 7.7 |
| HYDROGENATED COTTONSEED OIL | 2.0 | 8.0 | — | 15.0 | 17.0 | 10.0 |
| PARTIALLY HYDROGENATED SOYBEAN<br>AND PALM OIL | 20.0 | 6.0 | — | 19.0 | — | 7.0 |
| PARTIALLY HYDROGENATED COTTON-<br>SEED OIL | — | — | 10.0 | — | — | 6.7 |
| NEOBEE M-5 | 3.0 | 4.0 | 5.0 | 6.0 | 5.8 | 4.0 |
| GLYCEROL MONOSTEARATE | 10.0 | — | 5.0 | 5.0 | 1.7 | 3.7 |
| LECITHIN | — | 8.0 | — | — | — | — |

### EXAMPLES 135-140

| IDENTIFICATION - EXAMPLES #:<br>GENERIC INGREDIENTS | 135 | 136 | 137 | 138 | 139 | 140 |
|---|---|---|---|---|---|---|
| ** SYNTHETIC ELASTOMER ** | | | | | | |
| BUTYL (ISOPRENE-ISOBUTYLENE)<br>ELASTOMER | 16.0 | 9.9 | 9.9 | 10.0 | 10.0 | 13.3 |
| POLYISOBUTYLENE | 10.0 | 15.5 | 15.5 | 15.9 | 15.9 | 21.2 |
| POLYVINYL ACETATE | 24.0 | 22.0 | 22.0 | 21.7 | 21.6 | 29.1 |
| ** FILLER ** | | | | | | |
| CALCIUM CARBONATE | 5.0 | 12.9 | 12.9 | 13.3 | — | 17.7 |
| TALC | 10.0 | — | — | — | 13.1 | — |
| ** SOFTENERS ** | | | | | | |
| HYDROGENATED SOYBEAN OIL | 5.0 | 14.0 | 11.0 | 3.3 | 16.5 | 6.1 |
| HYDROGENATED COTTONSEED OIL | — | 13.0 | 13.0 | 13.3 | 16.5 | 6.1 |
| PARTIALLY HYDROGENATED SOYBEAN<br>AND PALM OIL | 3.0 | 5.0 | 10.0 | — | — | 2.0 |
| PARTIALLY HYDROGENATED COTTON-<br>SEED OIL | — | — | — | 9.8 | — | — |
| NEOBEE M-5 | 20.0 | 5.0 | 3.0 | 10.0 | 3.8 | 3.2 |
| GLYCEROL MONOSTEARATE | 2.0 | 2.7 | 1.7 | 2.7 | 2.6 | 1.3 |
| LECITHIN | — | — | 1.0 | — | — | — |

It should be understood that various changes and modifications to the presently preferred embodiments described herein will be apparent to those skilled in the art. It is therefore intended that such changes and modifications be covered by the appended claims.

**Claims**

1.   Use of medium chain triglycerides in a chewing gum formulation to reduce the stickiness of a chewing gum product.

2.   Use according to Claim 1 wherein the medium chain triglycerides make up 0.01% to 5% by weight of the chewing gum formulation.

3.   Use according to Claim 1 or 2 wherein the chewing gum formulation comprises:

an insoluble gum base;
a water soluble portion;

a flavor; and
an effective amount of medium chain triglycerides to create a chewing gum product having reduced stickiness as compared to a typical chewing gum product.

4. The chewing gum formulation of Claim 3 including at least one softener chosen from the group consisting of: tallow; hydrogenated tallow; hydrogenated and partially hydrogenated vegetable oils; cocoa butter; glycerol monostearate; glycerol triacetate; and lecithin.

5. Use according to Claim 3 or 4 wherein the formulation includes a bulk sweetener.

6. Use according to any one of Claims 3 to 5 wherein the formulation includes a high intensity sweetener.

7. Use according to any one of Claims 3 to 6 wherein the formulation includes an emulsifier.

8. Use according to any one of Claims 3 to 7 wherein the formulation includes an elastomer plasticizer.

9. Use according to any one of Claims 3 to 8 wherein the formulation includes an elastomer.

10. Use according to any one of Claims 3 to 9 wherein the formulation includes lecithin.

11. Use according to any one of the preceding claims wherein the chewing gum product is in the form of a stick.

12. Use according to any one of Claims 1 to 10 wherein the chewing gum product is in the form of a pellet.

13. Use according to Claim 12 wherein the pellet-shaped chewing gum is prepared by:

creating sheets of chewing gum having a plurality of individual pellets, the chewing gum including a sufficient amount of medium chain triglycerides to allow the sheets to break into a plurality of individual pellets without damaging the individual pellets; and
breaking the sheets into individual pellets.

14. Use of at least 0.01% by weight medium chain triglycerides in a chewing gum formulation to improve the shelf life of flavour that is contained in the chewing gum product.

15. Use according to Claim 14 wherein the chewing gum is created in the form of a stick.

16. Use according to Claim 14 wherein the chewing gum is created in the form of a pellet.

**Patentansprüche**

1. Verwendung von mittelkettigen Triglyceriden in einer Kaugummiformulierung zum Verringern der Klebrigkeit eines Kaugummiproduktes.

2. Verwendung nach Anspruch 1, wobei die mittelkettigen Triglyceride 0,01 Gew.-% bis 5 Gew.-% der Kaugummiformulierung ausmachen.

3. Verwendung nach Anspruch 1 oder 2, wobei die Kaugummiformulierung umfasst:

eine unlösliche Gummibase;
einen wasserlöslichen Anteil;
einen Aromastoff; und
eine wirksame Menge von mittelkettigen Triglyceriden,

um ein Kaugummiprodukt mit verringerter Klebrigkeit im Vergleich zu einem typischen Kaugummiprodukt zu erzeugen.

4. Kaugummiformulierung nach Anspruch 3, enthaltend wenigstens ein Erweichungsmittel, ausgewählt aus der Gruppe bestehend aus: Talg; hydriertem Talg; hydrierten und teilweise hydrierten pflanzlichen Ölen; Kakaobutter; Glycerinmonostearat; Glycerintriacetat; und Lecithin.

5. Verwendung nach Anspruch 3 oder 4, wobei die Formulierung ein Füllstoff-Süßungsmittel enthält.

6. Verwendung nach einem der Ansprüche 3 bis 5, wobei die Formulierung ein Süßungsmittel mit hoher Süßkraft enthält.

7. Verwendung nach einem der Ansprüche 3 bis 6, wobei die Formulierung einen Emulgator enthält.

8. Verwendung nach einem der Ansprüche 3 bis 7, wobei die Formulierung einen Elastomerweichmacher enthält.

9. Verwendung nach einem der Ansprüche 3 bis 8, wobei die Formulierung ein Elastomer enthält.

10. Verwendung nach einem der Ansprüche 3 bis 9, wobei die Formulierung Lecithin enthält.

11. Verwendung nach einem der vorhergehenden Ansprüche, wobei das Kaugummiprodukt in Form eines Streifens vorliegt.

12. Verwendung nach einem der Ansprüche 1 bis 10, wobei das Kaugummiprodukt in Form eines Kissens vorliegt.

13. Verwendung nach Anspruch 12, wobei der kissenförmige Kaugummi hergestellt wird durch:

Erzeugen von Kaugummiplatten mit einer Vielzahl einzelner Kissen, wobei der Kaugummi eine ausreichende Menge an mittelkettigen Triglyceriden enthält, um zu ermöglichen, dass die Platten in eine Vielzahl von einzelnen Kissen zerkleinert werden, ohne die einzelnen Kissen zu beschädigen; und

Zerkleinern der Platten zu einzelnen Kissen.

14. Verwendung von wenigstens 0,01 Gew.-% mittelkettigen Triglyceriden in einer Kaugummiformulierung, um die Lagerstabilität eines Aromastoffes zu verbessern, der in dem Kaugummiprodukt enthalten ist.

15. Verwendung nach Anspruch 14, wobei der Kaugummi in Form eines Streifens erzeugt wird.

16. Verwendung nach Anspruch 14, wobei der Kaugummi in Form eines Kissens erzeugt wird.

**Revendications**

1. Utilisation de triglycérides à chaîne moyenne dans une formulation de gomme à mâcher pour réduire la pégosité d'un produit gomme à mâcher.

2. Utilisation selon la revendication 1, dans laquelle les triglycérides à chaîne moyenne constituent jusqu'à 0,01 % à 5 % en poids de la formulation de gomme à mâcher.

3. Utilisation selon la revendication 1 ou 2, dans laquelle la formulation de gomme à mâcher comprend :

une base de gomme insoluble ;
une partie soluble dans l'eau ;
un arôme ; et
une quantité efficace de triglycérides à chaîne moyenne pour créer un produit gomme à mâcher ayant une pégosité réduite par comparaison à un produit gomme à mâcher typique.

4. Formulation de gomme à mâcher selon la revendication 3, comprenant au moins un émollient choisi dans l'ensemble constitué de : suif ; suif hydrogéné ; huiles végétales hydrogénées et huiles végétales partiellement hydrogénées ; beurre de cacao ; monostéarate de glycérol ; triacétate de glycérol ; et lécithine.

5. Utilisation selon la revendication 3 ou 4, dans laquelle la formulation comprend un édulcorant de charge.

**6.** Utilisation selon l'une quelconque des revendications 3 à 5, dans laquelle la formulation comprend un édulcorant d'intensité élevée.

**7.** Utilisation selon l'une quelconque des revendications 3 à 6, dans laquelle la formulation comprend un émulsifiant.

**8.** Utilisation selon l'une quelconque des revendications 3 à 7, dans laquelle la formulation comprend un plastifiant pour élastomère.

**9.** Utilisation selon l'une quelconque des revendications 3 à 8, dans laquelle la formulation comprend un élastomère.

**10.** Utilisation selon l'une quelconque des revendications 3 à 9, dans laquelle la formulation comprend de la lécithine.

**11.** Utilisation selon l'une quelconque des revendications précédentes, dans laquelle le produit gomme à mâcher est sous la forme d'une tablette.

**12.** Utilisation selon l'une quelconque des revendications 1 à 10, dans laquelle le produit gomme à mâcher est sous la forme d'une bille.

**13.** Utilisation selon la revendication 12, dans laquelle on prépare la gomme à mâcher en forme de bille en :

formant des feuilles de gomme à mâcher ayant une pluralité de billes individuelles, la gomme à mâcher comprenant une quantité suffisante de triglycérides à chaîne moyenne pour permettre aux feuilles de se rompre en une pluralité de billes individuelles sans endommager les billes individuelles ; et
rompant les feuilles en des billes individuelles.

**14.** Utilisation d'au moins 0,01 % en poids de triglycérides à chaîne moyenne dans une formulation de gomme à mâcher pour améliorer la durée de conservation d'un arôme qui est contenu dans le produit gomme à mâcher.

**15.** Utilisation selon la revendication 14, dans laquelle on produit la gomme à mâcher sous la forme d'une tablette.

**16.** Utilisation selon la revendication 14, dans laquelle on produit la gomme à mâcher sous la forme d'une bille.